# EUROPEAN PATENT SPECIFICATION

(11) **EP 3 999 416 B1**
(45) Date of publication and mention of the grant of the patent: **28.02.2024**
(21) Application number: 20751195.7
(22) Date of filing: 17.07.2020
(51) Int. Cl.: B64C 3/10, B64C 27/08, B64C 27/26, B64C 29/00, B64C 39/06, B64C 39/08, B64U 10/13, B64U 30/10, B64U 30/20, B64C 39/02

(54) **CLOSED WING VTOL AIRCRAFT**
BOXWING-VTOL-FLUGZEUGE
VTOL AVEC AILES EN ANNEAU

(30) Priority: 18.07.2019 GB 201910278
(43) Date of publication of application: 25.05.2022
(73) Proprietor: GKN Aerospace Services Limited, Shirley, Solihull B90 8BG (GB)
(72) Inventor: DE GRAAFF, Arent-Jan, 3351 LB Papendrecht (ZH) (NL)
(74) Representative: D Young & Co LLP
(86) International application number: PCT/GB2020/051716
(87) International publication number: WO 2021/009516

(56) References cited:
- EP-A1- 3 412 567
- EP-A2- 3 119 673
- WO-A1-2011/081683
- WO-A1-2015/019255
- WO-A1-2019/056052
- WO-A1-2019/202325
- CN-A- 109 018 340
- CN-A- 109 987 223

## Description

### Background

The present invention is concerned with an aircraft.

There currently exists a number of different types of aircraft employing a variety of different shapes and sizes. The present invention is directed to a particular aircraft type having a particular type of wing design, which is nominally particularly suited for use in smaller aircraft and also VTOL (vertical take-off and landing) aircraft.

Existing prior art includes WO 2015/019255, which relates to boxwing airplane, has connectors structurally connecting wings, and propulsion units partially housed in through-holes and hinged to wings to rotate with respect to wings varying angle between propulsion axes and axis of development; CN 109 018 340, which relates to rolling wing aircraft, has rolling wing rotated along horizontal axis for supplying forward and upward power to nacelle and changing height of nacelle by changing gas ratio in buoy when nacelle is in underwater; WO 2011/081683, which relates to an aerial vehicle adapted for vertical takeoff and landing using the same set of engines for takeoff and landing as well as for forward flight. The aerial vehicle is adapted to takeoff with the wings in a vertical as opposed to horizontal flight attitude which takes off in this vertical attitude and then transitions to a horizontal flight path;
CN 109 987 223, which relates to a vertical take-off and landing unmanned aerial vehicle wing connecting structure, has wings fixed with each other to form rhombus structure, where one of wings is vertically fixed to lower end of another wing provided with power mechanism;
EP 3,412,567, which relates to a personalized transport utilization aerial vehicle with high cruising speed capability, has pair of rear propulsion devices pivotal between take-off position and cruise position in which direction of thrust of rear propulsion devices is oriented along longitudinal axis; WO 2019/056052, which relates to a wing tilt actuation system for electric vertical take-off and landing (VTOL) aircraft, has control system for selectively operating electric motors at different rotational speed to generate turning moment to pivot control surface; and EP 3,119,673, which relates to vertical take-off and landing aircraft, has left side wing rotor assemblies for protruding forward of leading edge of left side wing.

### Summary of the Invention

Aspects of the invention are set out in the accompanying claims.

In that respect, in accordance with a first aspect there is provided an aircraft comprising:
a main body;
a pair of wing sections, each wing section comprising a front wing and a rear wing, wherein the front wing and the rear wing each comprise a first end that is connected to the main body, and a second end, wherein the second end of the front wing is connected to the second end of the rear wing;
wherein the main body is located between the pair of wing sections, and each wing section comprises a propulsion unit located between the front wing and the rear wing of the wing section;
wherein each propulsion unit comprises a first rotor and a second rotor;
wherein the first rotor is connected to at least one of the front wing and the main body, wherein the front wing comprises a recess in which the first rotor is at least partially accommodated, when the first rotor is connected to the front wing;
wherein the second rotor is connected to the rear wing, wherein the rear wing comprises a recess in which the second rotor is at least partially accommodated.

The provision of the pair of wing sections whose front and rear wings each have a second end that are connected to each other, where the propulsion unit is located between these front and rear wings provides an aerodynamic arrangement that is particularly suited for use in smaller aircraft and also VTOL (vertical take-off and landing) aircraft.

It will be appreciated that a variety of different propulsion units may be used for propelling aircraft in use. In some embodiments, the first rotor and the second rotor may be pivotable with respect to the front and rear wings as required and/or the rest of the aircraft.

In accordance with some embodiments, the first rotor may be located nearer the first end of the front wing than it is to the second end of the front wing.

In accordance with some embodiments, the second rotor may be located nearer the first end of the rear wing than it is to the second end of the rear wing.

In some embodiments, the rear wing may be located above the front wing in a height direction of the aircraft.

In accordance with some embodiments, to help control and direct the thrust generated from the first and second rotors of each wing section, the second rotor in such embodiments may be located above the first rotor in a height direction of the aircraft.

In accordance with some embodiments, for each wing portion, the rear wing may comprise a rear edge, wherein starting from the second end of the rear wing in a direction towards the first end of the rear wing, the rear edge of the rear wing extends in a direction away from the front wing.

The main body may comprise a canopy enclosing a cockpit of the aircraft, wherein at least one of the rotors is located beneath the canopy in a height direction of the aircraft. In such embodiments, to reduce the chance of injury to an occupant of the aircraft when it is in use, it may be that each first rotor is located beneath the canopy in a height direction of the aircraft, and/or each second rotor may be located beneath the canopy in a height direction of the aircraft. In some embodiments, each second rotor may be at least partially located behind the canopy in a length direction of the aircraft.

In the broadest sense of the invention, it is envisaged that any type of aircraft may be employed. In some particular embodiments however, the aircraft may be a single-seat aircraft; an unmanned aerial vehicle; and/or a VTOL (vertical take-off and landing)

In some embodiments, the aircraft does not comprise a tail fin.

In some embodiments, the aircraft does not comprise a tail rotor.

In some embodiments, each wing section forms a loop that is connected to the main body in at least two locations, wherein the two locations comprise the first end of the front wing and the first end of the rear wing.

### Drawings

Aspects of the invention will now be described, by way of example only, with reference to the accompanying figures in which:
Figure 1 shows a perspective view of a first embodiment aircraft.
Figure 2 shows a perspective view of a second embodiment aircraft.

While the invention is susceptible to various modifications and alternative forms, specific embodiments are shown by way of example in the drawings and are herein described in detail. It should be understood however that drawings and detailed description attached hereto are not intended to limit the invention to the particular form disclosed but rather the invention is to cover all modifications, equivalents and alternatives falling within the spirit and scope of the claimed invention

It will be recognised that the features of the aspects of the invention(s) described herein can conveniently and interchangeably be used in any suitable combination, as far as they fall within the scope of the appended claims. It will also be recognised that the invention covers not only individual embodiments but also combinations of the embodiments that have been discussed herein, as far as they fall within the scope of the appended claims.

### Detailed Description

Aspects and features of certain examples and embodiments are discussed / described herein. Some aspects and features of certain examples and embodiments may be implemented conventionally and these are not discussed / described in detail in the interests of brevity. It will thus be appreciated that aspects and features of apparatus and methods discussed herein which are not described in detail may be implemented in accordance with any conventional techniques for implementing such aspects and features.

With reference to the Figures, there is shown an aircraft 1 comprising a main body 10 and a pair of wing sections 12. In the aircraft shown in the Figures, the aircraft 1 extends about a length direction L, a width direction W, and a height direction H, which are all directions that are perpendicular to each other.

The main body 10 is located between the pair of wing sections 12, such that the pair of wing sections comprises a first, left, wing section 12A located on a first, left, side 10A of the main body; and a second, right, wing section 12B located on a second, right, side 10B of the main body 10.

Each wing section 12 comprises a front wing 14 and a rear wing 16. The front wing 14 comprises a first end 17 that is connected to the main body 10, and a second end 18 which is opposite the first end of the front wing. Similarly, the rear wing 16 comprises a first end 20 that is connected to the main body 10, and a second end 22 which is opposite the first end 20 of the rear wing 16.

The second end 18 of the front wing 14 of each wing section 12 is connected to the second end 22 of the rear wing 16 of the wing section. As such, each wing section forms a loop that is connected to the main body 10 in at least two locations, namely at the first end 17 of the front wing 14, and at the first end 20 of the rear wing 16. This arrangement generates a wing section 12 that has both good mechanical strength, and which also demonstrates reduced induced drag properties.

In the embodiments shown in the Figures, the rear wing 16 of each wing section 12 may be located above (for the avoidance of any doubt, not necessarily directly above), the front wing 14 in a height direction H of the aircraft 10.

The rear wing of each wing section comprises a rear/trailing edge 24. In accordance with some embodiments, starting from the second end 22 of the rear wing 16 in a direction towards the first end 20 of the rear wing 16, the rear edge 24 may extend in a direction D1 away from the front wing 14. Put differently, each direction D1 may extend in a rearward direction towards a rear of the main body 10.

Each wing section 12 comprises a propulsion unit 30, located between the front wing 14 and the rear wing 16 of the wing section, for generating thrust to propel the aircraft in use. In the aircraft 10 shown in the Figures, each propulsion unit 30 comprises a first rotor 32 and a second rotor 34. In such embodiments, the propulsion unit 30 of each wing section 12 may be located between a front/leading edge 36 of the front wing 14 and the rear edge 24 of the rear wing 16. Providing such a wing section 12 where the propulsion unit 30 is located between the front wing 14 and the rear wing 16 not only provides for a wing section 12 with good mechanical strength, but also allows the front and rear wings 14;16 to act as a physical barrier for better preventing inadvertent access by ground crew to the propulsion unit 30when the aircraft 1 is on the ground and when the propulsion unit 30 is operational.

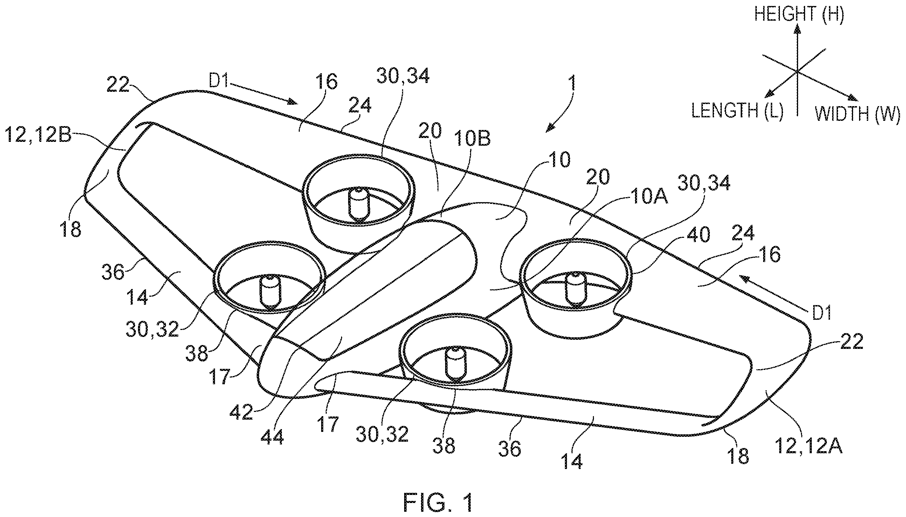

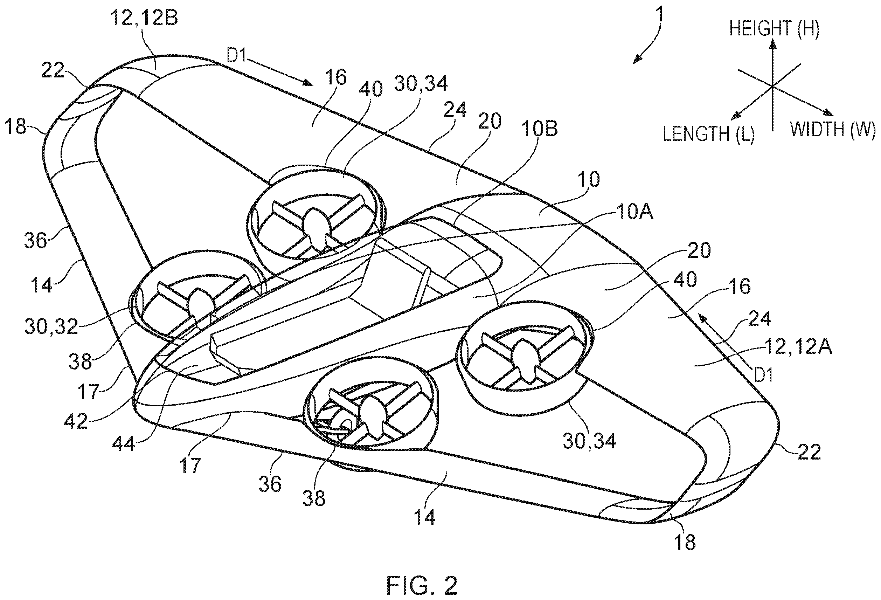

The first rotor 32 is connected to the front wing 14, and/or the main body 10. As those shown in the embodiment of aircraft from Figures 1 and 2, the front wing 14 of each wing section 12 comprise a recess 38 in which the first rotor 32 is at least partially accommodated. In accordance with some embodiments, the first rotor 32 may be pivotable with respect to the front wing 14 and/or the recess 32 as required to allow better control of thrust generated from the rotor with respect to the aircraft 1.

With respect to the second rotor 34 of each wing section 12, The second rotor 34 may be connected to the rear wing 16 and/or the main body 10. The rear wing 16 comprises a recess 40 in which the second rotor 34 is at least partially accommodated. Again, in some embodiments, the second rotor 34 may be pivotable with respect to the rear wing 14 and/or the recess 40 for better controlling the thrust generated from the rotor with respect to the aircraft 1.

By allowing each propulsion unit 30, and/or the first and second rotors 32;34, to pivot with respect to the rest of the aircraft 1, this serves to better allow the aircraft 1 to be used as a VTOL (vertical take-off and landing) aircraft.

In some embodiments, such as those shown in Figures 1 and 2, to help control and direct the thrust generated from the first and second rotors 32;34 of each wing section, the first rotor 32 may be located nearer the first end 17 of the front wing 14 than it is to the second end 18 of the front wing 14, and/or with the second rotor 34 located nearer the first end 20 of the rear wing than it is to the second end 22 of the rear wing 16.

In additional embodiments to help control and direct the thrust generated from the first and second rotors 32;34, in such embodiments the second rotor 34 may be located above the first rotor 32 in the height direction H of the aircraft 1. In the particular embodiments of aircraft 1 shown in Figure 1 and 2, the second rotor 34 is located above the first rotor 32 in the height direction H of the aircraft 1, yet behind the first rotor 32 in a length direction L of the aircraft 1.

Particularly in embodiments where the aircraft is a manned aircraft, the main body 10 of the aircraft 1 may comprise a canopy 42 enclosing a cockpit 44 of the aircraft 1. The cockpit 44 in some embodiments may be configured such that the aircraft may be provided as a single-seat aircraft, as is shown in the embodiment aircraft 1 from Figures 1 and 2.

In embodiments where the canopy 42 is present, to reduce the chance of injury to an occupant of the aircraft from each propulsion unit 30, the propulsion unit 30; first rotor 32; and/or second rotor 34 of each wing section 12 may in some embodiments be located beneath the canopy 42 in a height direction H of the aircraft 1. In some embodiments, the second rotor 34 may be at least partially located behind the canopy 42 in a length direction L of the aircraft 1.

In terms of the powering and control of the aircraft 1, it will be appreciated that the necessary electronics, power source, mechanical and electrical controls and connections may be distributed throughout the aircraft 1 as required. In cases where the aircraft is an unmanned aerial vehicle, the aircraft 1 would also then as required comprises the necessary communication means for it to be operated by a user from a location remote from the aircraft.

Thus, from one perspective, there has now been an aircraft comprising: a main body; a pair of wing sections, each wing section comprising a front wing and a rear wing, wherein the front wing and the rear wing each comprise a first end that is connected to the main body, and a second end, wherein the second end of the front wing is connected to the second end of the rear wing; wherein the main body is located between the pair of wing sections, and each wing section comprises a propulsion unit located between the front wing and the rear wing of the wing section. The provision of the pair of wing sections whose front and rear wings each have a second end that are connected to each other, where the propulsion unit is located between these front and rear wings provides an aerodynamic arrangement that, although not exclusively, is particularly suited for use in smaller aircraft and also VTOL (vertical take-off and landing) aircraft.

In order to address various issues and advance the art, this disclosure shows by way of illustration various embodiments in which the claimed invention(s) may be practiced. The advantages and features of the disclosure are of a representative sample of embodiments only, and are not exhaustive and/or exclusive. They are presented only to assist in understanding and to teach the claimed invention(s).

Various embodiments may suitably comprise, consist of, or consist essentially of, various combinations of the disclosed elements, components, features, parts, steps, means, etc. other than those specifically described herein, and it will thus be appreciated that features of the dependent claims may be combined with features of the independent claims in combinations as far as they fall within the scope of the claims.

It will be appreciated that while the above description has focused on some specific aircraft configurations comprising a number of different features, aircraft in accordance with other embodiments of the disclosure may not include all these features, as far as it fall within the scope of the appended claims. For example, the aircraft shown in the Figures are shown as comprising a cockpit for a pilot that is enclosed by a canopy. However, in some embodiments the aircraft may be operated without such a canopy/cockpit and instead take the form of an unmanned aerial vehicle, which may for instance then have communication means for being operated by a user from a location remote from the aircraft.

## Claims

1. An aircraft (1) comprising:
a main body (10);
a pair of wing sections (12;12A;12B), each wing section comprising a front wing (14) and a rear wing (16), wherein the front wing and the rear wing each comprise a first end (17; 20) that is connected to the main body, and a second end (18;22), wherein the second end (18) of the front wing is connected to the second end (22) of the rear wing (16);
wherein the main body (10) is located between the pair of wing sections, and each wing section comprises a propulsion unit (30) located between the front wing (14) and the rear wing (16) of the wing section (12);
wherein each propulsion unit (30) comprises a first rotor (32) and a second rotor (34);
wherein the first rotor (32) is connected to at least one of the front wing and the main body, wherein the front wing comprises a recess (38) in which the first rotor is at least partially accommodated;
wherein the second rotor (34) is connected to the rear wing (16), wherein the rear wing (16) comprises a recess (40) in which the second rotor (34) is at least partially accommodated.

2. An aircraft according to claim 1, wherein the first rotor (32) is located nearer the first end (17) of the front wing (14) than it is to the second end (18) of the front wing (14).

3. An aircraft according to any of claims 1-2, wherein the second rotor (34) is located nearer the first end (20) of the rear wing (16) than it is to the second end (22) of the rear wing (16).

4. An aircraft according to any preceding claim, wherein the rear wing (16) is located above the front wing (14) in a height direction of the aircraft.

5. An aircraft according to any preceding claim, wherein the second rotor (34) is located above the first rotor (32) in a height direction of the aircraft.

6. An aircraft according to any preceding claim, wherein the rear wing (16) comprises a rear edge (24), wherein starting from the second end (22) of the rear wing (16) in a direction towards the first end (20) of the rear wing (16), the rear edge (24) of the rear wing extends in a direction away from the front wing (14).

7. An aircraft according to any preceding claim, wherein the main body comprises a canopy (42) enclosing a cockpit (44) of the aircraft, wherein at least one of the rotors is located beneath the canopy (42) in a height direction of the aircraft.

8. An aircraft according to claim 7, wherein each first rotor (32) is located beneath the canopy (42) in a height direction of the aircraft.

9. An aircraft according to claim 7 or 8, wherein each second rotor (34) is located beneath the canopy (42) in a height direction of the aircraft.

10. An aircraft according to any of claims 7-9, wherein the aircraft is an unmanned aerial vehicle.

11. An aircraft according to any preceding claim, wherein the aircraft is a single-seat aircraft.

12. An aircraft according to any preceding claim, wherein the aircraft is a vertical take-off and landing aircraft, VTOL aircraft.

13. An aircraft according to any preceding claim, wherein the aircraft does not comprise a tail fin.

14. An aircraft according to any preceding claim, wherein the aircraft does not comprise a tail rotor.

15. An aircraft according to any preceding claim, wherein each wing section forms a loop that is connected to the main body in at least two locations, wherein the two locations comprise the first end (17) of the front wing (14) and the first end (20) of the rear wing (16).

## Patentansprüche

1. Flugzeug (1), umfassend:
einen Hauptkörper (10);
ein Paar von Flügelabschnitten (12; 12A; 12B), wobei jeder Flügelabschnitt einen Vorderflügel (14) und einen Hinterflügel (16) umfasst, wobei der Vorderflügel und der Hinterflügel jeweils ein erstes Ende (17; 20), das mit dem Hauptkörper verbunden ist, und ein zweites Ende (18; 22) umfassen, wobei das zweite Ende (18) des Vorderflügels mit dem zweiten Ende (22) des Hinterflügels (16) verbunden ist;
wobei der Hauptkörper (10) zwischen dem Paar von Flügelabschnitten angeordnet ist und jeder Flügelabschnitt eine Antriebseinheit (30) umfasst, die zwischen dem Vorderflügel (14) und dem Hinterflügel (16) des Flügelabschnitts (12) angeordnet ist;
wobei jede Antriebseinheit (30) einen ersten Rotor (32) und einen zweiten Rotor (34) umfasst;
wobei der erste Rotor (32) mit mindestens einem des Vorderflügels und des Hauptkörpers verbunden ist, wobei der Vorderflügel eine Aussparung (38) umfasst, in der der erste Rotor mindestens teilweise untergebracht ist;
wobei der zweite Rotor (34) mit dem Hinterflügel (16) verbunden ist, wobei der Hinterflügel (16) eine Aussparung (40) umfasst, in der der zweite Rotor (34) mindestens teilweise untergebracht ist.

2. Flugzeug gemäß Anspruch 1, wobei der erste Rotor (32) näher am ersten Ende (17) des Vorderflügels (14) als am zweiten Ende (18) des Vorderflügels (14) angeordnet ist.

3. Flugzeug gemäß Anspruch 1-2, wobei der zweite Rotor (34) näher am ersten Ende (20) des Hinterflügels (16) als am zweiten Ende (22) des Hinterflügels (16) angeordnet ist.

4. Flugzeug gemäß einem der vorhergehenden Ansprüche, wobei der Hinterflügel (16) in Höhenrichtung des Flugzeugs oberhalb des Vorderflügels (14) angeordnet ist.

5. Flugzeug gemäß einem der vorhergehenden Ansprüche, wobei der zweite Rotor (34) in Höhenrichtung des Flugzeugs oberhalb des ersten Rotors (32) angeordnet ist.

6. Flugzeug gemäß einem der vorhergehenden Ansprüche, wobei der Hinterflügel (16) eine Hinterkante (24) umfasst, wobei sich die Hinterkante (24) des Hinterflügels ausgehend vom zweiten Ende (22) des Hinterflügels (16) in Richtung des ersten Endes (20) des Hinterflügels (16) in einer Richtung weg vom Vorderflügel (14) erstreckt.

7. Flugzeug gemäß einem der vorhergehenden Ansprüche, wobei der Hauptkörper eine Kabinenhaube (42) umfasst, die ein Cockpit (44) des Flugzeugs umschließt, wobei mindestens einer der Rotoren in Höhenrichtung des Flugzeugs unterhalb der Kabinenhaube (42) angeordnet ist.

8. Flugzeug gemäß Anspruch 7, wobei jeder erste Rotor (32) in Höhenrichtung des Flugzeugs unterhalb der Kabinenhaube (42) angeordnet ist.

9. Flugzeug gemäß Anspruch 7 oder 8, wobei jeder zweite Rotor (34) in Höhenrichtung des Flugzeugs unterhalb der Kabinenhaube (42) angeordnet ist.

10. Flugzeug gemäß einem der Ansprüche 7-9, wobei das Flugzeug ein unbemanntes Luftfahrzeug ist.

11. Flugzeug gemäß einem der vorhergehenden Ansprüche, wobei das Flugzeug ein einsitziges Flugzeug ist.

12. Flugzeug gemäß einem der vorhergehenden Ansprüche, wobei das Flugzeug ein senkrecht startendes und landendes Flugzeug, VTOL, ist.

13. Flugzeug gemäß einem der vorhergehenden Ansprüche, wobei das Flugzeug keine Heckflosse umfasst.

14. Flugzeug gemäß einem der vorhergehenden Ansprüche, wobei das Flugzeug keinen Heckrotor umfasst.

15. Flugzeug gemäß einem der vorhergehenden Ansprüche, wobei jeder Flügelabschnitt eine Schleife bildet, die an mindestens zwei Stellen mit dem Hauptkörper verbunden ist, wobei die zwei Stellen das erste Ende (17) des Vorderflügels (14) und das erste Ende (20) des Hinterflügels (16) umfassen.

## Revendications

1. Aéronef (1), comprenant :
un corps principal (10) ;
une paire de tronçons d'aile (12 ; 12A ; 12B), chaque tronçon d'aile comprenant une aile avant (14) et une aile arrière (16), l'aile avant et l'aile arrière comprenant chacune une première extrémité (17 ; 20) qui est reliée au corps principal, et une deuxième extrémité (18 ; 22), la deuxième extrémité (18) de l'aile avant étant reliée à la deuxième extrémité (22) de l'aile arrière (16) ;
le corps principal (10) étant situé entre la paire de tronçons d'aile, et chaque tronçon d'aile comprenant une unité de propulsion (30) située entre l'aile avant (14) et l'aile arrière (16) du tronçon d'aile (12) ;
chaque unité de propulsion (30) comprenant un premier rotor (32) et un deuxième rotor (34) ;
le premier rotor (32) étant relié à l'aile avant et/ou au corps principal, l'aile avant comprenant un renfoncement (38) dans lequel le premier rotor se loge au moins partiellement ;
le deuxième rotor (34) étant relié à l'aile arrière (16), l'aile arrière (16) comprenant un renfoncement (40) dans lequel le deuxième rotor (34) se loge au moins partiellement.

2. Aéronef selon la revendication 1, le premier rotor (32) étant situé plus près de la première extrémité (17) de l'aile avant (14) qu'il ne l'est de la deuxième extrémité (18) de l'aile avant (14).

3. Aéronef selon l'une quelconque des revendications 1 à 2, le deuxième rotor (34) étant situé plus près de la première extrémité (20) de l'aile arrière (16) qu'il ne l'est de la deuxième extrémité (22) de l'aile arrière (16) .

4. Aéronef selon l'une quelconque des revendications précédentes, l'aile arrière (16) étant située au-dessus de l'aile avant (14) dans le sens de la hauteur de l'aéronef.

5. Aéronef selon l'une quelconque des revendications précédentes, le deuxième rotor (34) étant situé au-dessus du premier rotor (32) dans le sens de la hauteur de l'aéronef.

6. Aéronef selon l'une quelconque des revendications précédentes, l'aile arrière (16) comprenant un bord arrière (24), en partant de la deuxième extrémité (22) de l'aile arrière (16) en direction de la première extrémité (20) de l'aile arrière (16), le bord arrière (24) de l'aile arrière s'étendant à l'opposé de l'aile avant (14).

7. Aéronef selon l'une quelconque des revendications précédentes, le corps principal comprenant une verrière (42) renfermant un cockpit (44) de l'aéronef, au moins un des rotors étant situé au-dessous de la verrière (42) dans le sens de la hauteur de l'aéronef.

8. Aéronef selon la revendication 7, chaque premier rotor (32) étant situé au-dessous de la verrière (42) dans le sens de la hauteur de l'aéronef.

9. Aéronef selon la revendication 7 ou 8, chaque deuxième rotor (34) étant situé au-dessous de la verrière (42) dans le sens de la hauteur de l'aéronef.

10. Aéronef selon l'une quelconque des revendications 7 à 9, l'aéronef étant un véhicule aérien sans pilote.

11. Aéronef selon l'une quelconque des revendications précédentes, l'aéronef étant un aéronef monoplace.

12. Aéronef selon l'une quelconque des revendications précédentes, l'aéronef étant un aéronef à décollage et atterrissage verticaux, VTOL.

13. Aéronef selon l'une quelconque des revendications précédentes, l'aéronef ne comprenant pas de dérive.

14. Aéronef selon l'une quelconque des revendications précédentes, l'aéronef ne comprenant pas de rotor de queue.

15. Aéronef selon l'une quelconque des revendications précédentes, chaque tronçon d'aile formant une boucle qui est reliée au corps principal en au moins deux endroits, les deux endroits comprenant la première extrémité (17) de l'aile avant (14) et la première extrémité (20) de l'aile arrière (16).
